(19) Europäisches Patentamt
European Patent Office
Office européen des brevets

(11) **EP 4 738 674 A1**

(12) **EUROPEAN PATENT APPLICATION**

(43) Date of publication:
06.05.2026   Bulletin 2026/19

(21) Application number: 25212510.9

(22) Date of filing: 30.10.2025

(51) International Patent Classification (IPC):
*H02M 1/00* (2006.01)   *H02M 1/14* (2006.01)
*H02M 7/217* (2006.01)   *H02M 3/335* (2006.01)

(52) Cooperative Patent Classification (CPC):
H02M 1/007; H02M 1/14; H02M 7/217; H02M 3/335

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority:  30.04.2025  PL 45193425

(71) Applicant: Ekoenergetyka - Polska Spolka
Akcyjna
66-002 Zielona Gora (PL)

(72) Inventors:
• **Chudzik, Przemyslaw**
03-320 Warszawa (PL)
• **Krynski, Arkadiusz**
04-689 Warszawa (PL)
• **Kaniewski, Jacek**
66-004 Zielona Góra (PL)
• **Jarnut, Marcin**
66-004 Zielona Góra (PL)
• **Stando, Dariusz**
03-984 Warszawa (PL)
• **Stynski, Sebastian**
04-256 Warszawa (PL)
• **Swiechowicz, Tomasz**
03-804 Warszawa (PL)

(74) Representative: **Grzelak, Anna**
Sigeon IP, sp z o. o.
ul. Bukowinska 24A m. 65
02-703 Warszawa (PL)

Remarks:
Claims filed after the date of filing of the application (Rule 68(4) EPC).

(54) **METHOD FOR CONTROLLING AC/DC CONVERTER FOR ELECTRIC VEHICLE CHARGING STATION**

(57)     The object of the invention is a method for controlling an **AC/DC** converter for an electric vehicle charging station, stabilising voltage in a **DC** circuit under voltage dip conditions during reduced capacitance in a **DC** link.

A method for controlling an **AC/DC** converter for electric vehicle charging stations, stabilising voltage in a **DC** circuit under voltage dip conditions during reduced capacitance in a **DC** link constituting the first conversion stage of a converter power module **CPM,** with reduced capacitance $C_{DC}$ in the direct current link **DC_link,** for applications in electric vehicle charging stations **DC_EVCS,** involving the determination of reference currents $I_{ref,\alpha\beta}$ using the method of symmetrical components, characterised in that the reference currents $I_{ref,\alpha\beta}$ are determined in the control system, and the negative sequence component of the measured power grid voltage $U_{conv}$ is modified by introducing factors **k, m** and **r** allowing for arbitrary shaping of the converter current $I_{conv}$.

**Fig. 1**

EP 4 738 674 A1

**Description**

**TECHNICAL FIELD**

The object of the invention is a method for controlling an **AC/DC** converter for an electric vehicle charging station, stabilising voltage in a **DC** circuit under voltage dip conditions during reduced capacitance in a **DC** link.

**PRIOR ART**

Energy storages, i.e. batteries in electric vehicles, are characterised by various electrical parameters. Apart from capacitance, they are characterised by their rated voltage and maximum allowable charging current, i.e. the maximum charging power. Depending on the kind, class and type of vehicle, these parameters take on different values. Small and medium-sized passenger vehicles are typically equipped with batteries with voltages ranging from 200 to 500 VDC and capacitances not exceeding 90 kWh. Premium class vehicles are equipped with batteries with capacitances in excess of 90 kWh and voltages up to 900 VDC. Heavy-duty electric vehicles have energy storages with capacitances in hundreds of kWh and voltages even up to 1,500 VDC. The various voltage parameters of electric vehicle batteries require charging stations to provide a wide DC voltage output range of 200-1500 VDC. Apart from the voltage required by a vehicle, a charging station must also provide the required charging current, and thus meet the power demand of the vehicle. In order to carry out the charging process, charging stations are equipped with dedicated **AC/DC** electronic energy converters, converting alternating current energy into direct current energy with electrical parameters required by the vehicle. The **AC/DC** electronic energy converters intended for implementation in electric vehicle charging stations are often referred to as power conversion modules, or simply power modules. Due to a wide range of the required output voltage and the need to implement galvanic isolation between an **AC** input and a **DC** output, converter modules usually consist of two conversion stages. The first stage is implemented by an **AC/DC** converter, converting AC voltage from an **AC** power grid into **DC** voltage. The second stage is implemented by an isolated **DC/DC** converter, whose function includes adapting the output voltage level of the charging station to the requirements of the vehicle, and implementing galvanic isolation.

In the classical approach, the ability to maintain charging power with voltage dips on the power grid side is achieved by using an energy buffer in a direct current link, between the output of an **AC/DC** converter, i.e. the output of the first conversion stage, and the input of a **DC/DC** converter, i.e. the input of the second conversion stage. This buffer is made in the form of high-capacitance electrolytic capacitors, capable of compensating for the energy deficiency during a voltage dip event. Even though it fulfils its function, this solution entails a number of drawbacks. One of them is the high failure rate of the energy buffer, which is made in the form of electrolytic capacitors. Due to the relatively high temperatures existing inside the converter modules, electrolytic capacitors undergo accelerated ageing processes, drastically shortening their service life and consequently leading to their damage and converter dysfunction. Electrolytic capacitors can be replaced with an energy buffer made using a different technology, e.g. by means of solid dielectric capacitors. Unfortunately, they have lower power density compared to electrolytic capacitors, requiring an increase in the size of the energy buffer, thus increasing the dimensions of the converter module. A large-sized energy buffer also impedes the flow of air cooling the converter, which contributes to worsening the cooling conditions of the converter. Furthermore, with constantly increasing power density of charging stations, solutions that increase the dimensions of the converter modules, and consequently the sizes of the stations, cease to be acceptable not only economically, but also commercially.

Solutions known from the literature and industrial implementations for stabilising voltage in a **DC** circuit under voltage dip conditions are based primarily on the use of an energy buffer with adequately large capacitance in a **DC** link. There are also known solutions in which this buffer is reduced. However, reduction in capacitance at the output of an **AC/DC** converter causes problems with the stabilisation of **DC** voltage in the link, which is crucial for the operation of the second conversion stage - the **DC/DC** converter. Moreover, during a voltage dip on the power grid side, a reduced energy buffer at the output of the **AC/DC** converter implementing the first conversion stage results in the occurrence of unacceptable voltage ripples in the **DC** link. These ripples greatly exceed the values found under nominal operating conditions. Along with the voltage ripples, the lack of voltage stabilisation in the **DC** link constituting a power source for the **DC/DC** converter lead to a deficiency in the energy necessary for the second conversion stage - the **DC/DC** converter - to provide the adequate voltage and charging current. The inability to provide the charging parameters required by the vehicle results in interrupting the charging process.

In order to detect dips and asymmetries in the supply voltage, and to improve voltage stabilisation in the **DC** circuit, advanced control algorithms are being implemented, by means of which the symmetrical components of voltage are determined, and the input voltages of the **AC/DC** converter are transformed from a three-phase **a-b-c** system to an α-βcoordinate system. Subsequently, the positive sequence component of voltage and, if necessary, also the negative sequence component of voltage are adjusted by means of appropriate adjustment systems, in order to maintain the required current-voltage parameters at the output of the **AC/DC** converter. However, due to their characteristics and mode of operation, these algorithms do not provide sufficient dynamics, especially since during voltage dips there are changes in not just the amplitude, but also the phase shift in the voltages powering the converter. Moreover, during a voltage dip, in the **DC** link, there are ripples with a frequency of 100 Hz in the $U_{DC}$ voltage, resulting from the introduction of reactive power during a voltage dip and active power asymmetry between individual phases, which is also unacceptable from the standpoint of the operation of the second **DC/DC** conversion stage. A known way to minimise them is to introduce into the setpoint currents a negative sequence component with a sign opposite to the one present in the power grid voltage. However, this solution is disadvantageous in that the rated currents of the **AC/DC** converter could be exceeded, resulting in its damage. In addition, a special case of a voltage dip defined in the standards, to which the charging station must be resistant, is the so-called 0% dip with a phase-shift. During such a dip, two phase voltages are mutually consistent in terms of phase and amplitude, having half the nominal amplitude value of the third phase voltage, and being counterphasic (inverted by 180[0]) with respect to this voltage. In such a case, all three supply voltages pass through zero at the same time. At these moments in time, this results in zero power that can be drawn from the power grid. Therefore, a power deficiency during such a voltage dip, caused by the introduction of symmetrical currents, results in a voltage ripple in the **DC** link, an energy deficiency in the **DC** link, insufficient amount of power for the **DC/DC** converter, and consequently interruption of the charging process.

From European Patent Description EP3520211B1 there is known a method for determining at least one current setpoint (I * a , I * b , I * c ) from at least one voltage measurement (U ab , U bc, U ca ) from a rectifier and at least one instantaneous active power setpoint (P req ), comprising a first step (I) of calculating at least one current setpoint (I * a, I * b , I * c ); a second step (II) of adaptive filtering of at least one current setpoint, and a third step (III) of limiting the degree of variation of at least one current setpoint (I * a, I * b, I * c). The invention is applicable to battery chargers for electric or hybrid vehicles.

From PCT application WO2017153366A1 there is known a method for controlling a three-phase charger without galvanic isolation, embedded in a motor vehicle with electric or hybrid traction, configured to perform a single-phase domestic charge, the charger comprising a rectifier connected to an input supply network via an electromagnetic compatibility filter and to a voltage booster stage via a smoothing inductor, the voltage booster stage being connected to a battery, the electromagnetic compatibility filter comprising a capacitor connected between two power supply phases of the charger, the rectifier and the voltage booster stage each comprising at least one controlled switch. The method comprises the following steps: the displacement factor and the loader distortion factor are corrected by determining a setpoint of the absolute value of the input current of the rectifier as a function of a current measurement of the power supply network and measurement of voltage at the terminals of an electromagnetic compatibility filter capacitor, and the current flowing in the smoothing inductor is regulated by controlling the voltage booster stage and the rectifier as a function of a measurement of the current in the smoothing inductor, a measurement of the input current of the rectifier, and the setpoint of the absolute value of the input current of the rectifier.

From another European Patent Description EP3807984B1 there is known a method for generating a current target value for a charging device connected to an electricity grid, comprising: a step of measuring at least one voltage of the electricity grid; a filtering step, in which filtered voltage (Vftr) is calculated on the basis of said measured voltage (Vmes) and a value of the electrical angular frequency ($\omega$G) of the electricity grid; a step of estimating a frequency (fG) and an amplitude (VG) of said at least one measured voltage on the basis of said at least one measured voltage and said at least one filtered voltage (Vftr); a consolidation step (64) comprising calculating a consolidated voltage (Vcs) on the basis of the measured voltage (Vmes) and the filtered voltage (Vftr); and a step of generating (65) a current setpoing (ireq) on the basis of said consolidated voltage (Vcs) and the estimated amplitude (VG).

From the French patent description FR3073992B1 there is known a method for controlling a three-phase rectifier, comprising: - a step of measuring the currents (ImesA, ImesB, ImesC) and voltages (VA, VB, VC) of phases at the input of said rectifier; - a step of determining an active power value (Pmes) and a reactive power value (Qmes) as a function of said measured currents and voltages; - a step of defining a first regulation (VP) for subordinate adjustment of said active power to a load power reference value (Preq); - a step of defining a second regulation (VQ) for subordinate reactive power value to a reactive power setpoint value (Qreq); - a step of determining control voltages (V#A, V#B, V#C) to be applied to each arm of said three-phase rectifier; and - a step of generating operating cycles as a function of said control voltages (V#A, V#B, V#C).

The existing solutions do not allow for controlling three-wire AC/DC converters with reduced capacitance in a direct current circuit, which are intended for implementation in electric vehicle charging stations, tolerating supply voltage dips on the AC power grid side, as required by the standards.

## DISCLOSURE OF THE INVENTION

The technical problem solved by the present invention is to reduce the required capacitance in the direct current link, and to minimise ripples. This effect is achieved by implementing the developed algorithm for determining reference currents.

In the light of the described prior art, the aim of the present invention is to overcome the disadvantages indicated and to provide a method for determining reference currents, in which minimisation of ripples in a DC circuit is achieved during a voltage dip on the power grid side, with a reduced value of capacitance in a direct current link.

The method for determining reference currents introduces scaling factor "k", selected by means of a linear function, whose argument is the ratio of the negative and positive sequence components of voltage. In addition, the value of the "k" factor depends on the maximum value of current in the converter. On the basis of the determined value of the "k" factor ranging from 0 to 1, currents in the converter are affected by means of the negative sequence component of voltage. Furthermore, in the case of dips of the 0% type with a phase-shift, scaling of the instantaneous active power is introduced to further reduce ripples in the **DC** link, at the expense of distortion of the input currents on the power grid side.

The method for controlling an **AC/DC** converter for electric vehicle charging stations, stabilising voltage in a **DC** circuit under voltage dip conditions during reduced capacitance in a **DC** link constituting the first conversion stage of a converter power module **CPM**, with reduced capacitance $C_{DC}$ in the direct current link **DC_link,** for applications in electric vehicle charging stations **DC_EVCS**, involving the determination of reference currents $I_{ref,\alpha\beta}$ using the method of symmetrical components **is characterised in that** the reference currents $I_{ref,\alpha\beta}$ are determined in the control system, and the negative sequence component of the measured power grid voltage $U_{conv}$ is modified by introducing factors **k, m** and **r** allowing for arbitrary shaping of the converter current $I_{conv}$, the determination of the reference currents $I_{ref,\alpha\beta}$ comprising the following steps:

**a)** factor m is selected with regard to the limitations of the rated currents of the converter, and the values of the reference currents $I_{ref,\alpha\beta}$ are determined for two characteristic values of factor **k:** k = 0.5 and k = 1,

**wherein** the effective values of the three-phase currents $I_a$, $I_b$, $I_c$ are determined after conversion from the $\alpha$-$\beta$ system to the a-b-c system ($\alpha\beta$/abc),
**whereas** for the determined currents, with factor k = 0.5 and k = 1, the maximum values $I_{max(k=0.5)}$ and $I_{max(k=1)}$ are selected and, in order to limit the maximum value of current $I_{max(k=1)}$ from factor k = 1, the characteristics of changes in the effective value of current are approximated as a function of factor **k,**
**and subsequently,** the determined values of the maximum currents from factor **k** equal to 0.5 $I_{max(k=0.5)}$ and **k** equal to 1 $I_{max(k=1)}$ are taken into account, and factor **m** resulting from the limit currents of the converter is calculated according to the following equation, its range being limited from a value of 0.5 to a value of 1:

$$m = 0,5 + 0,5\,\frac{I_{lim} - I_{\max(k=0,5)}}{I_{\max(k=1)} - I_{\max(k=0,5)}};$$

**b)** factor **r** is determined as the ratio of the negative sequence component of the measured voltage $U_n$ to the positive sequence component $U_p$, and the value of the ratio of the negative sequence component of the voltage $U_n$ to the positive sequence component $U_p$ ($U_n/U_p$) and the linear dependence of factor r on the ratio of the negative and positive sequence components ($U_n/U_p$) are determined using the following formula:

$$r = 4 - 5 \cdot \frac{U_n}{U_p}$$

where:

$$\frac{U_n}{U_p} = \sqrt{\frac{0.5\big(U_{\alpha d}^2 + U_{\alpha q}^2 + U_{\beta d}^2 + U_{\beta q}^2\big) + \big(U_{\beta q}U_{\alpha d} - U_{\beta d}U_{\alpha q}\big)}{0.5\big(U_{\alpha d}^2 + U_{\alpha q}^2 + U_{\beta d}^2 + U_{\beta q}^2\big) - \big(U_{\beta q}U_{\alpha d} - U_{\beta d}U_{\alpha q}\big)}}$$

**wherein** the value of factor **r** is determined depending on the calculated symmetrical components of the supply voltage, and if the value of the ratio of the negative sequence component to the positive sequence component of the voltage ($U_n/U_p$) takes on values below 0.6 ($U_n/U_p$ < 0.6), factor r permanently takes on a value of 1 (r = 1), **whereas, if** the value of the ratio of the negative sequence component to the positive sequence component of the voltage ($U_n/U_p$) is higher than 0.8 ($U_n/U_p$ > 0.8), factor r permanently takes on a value of 0 (r = 0), and the value of factor **r** depends on the ratio of the negative to positive sequence symmetrical components of the voltage ($U_n/U_p$);

**c)** for factor **m** determined in step a) and the value of factor r from step b), the lower value is chosen, the reference currents $I_{ref,\alpha\beta}$ are subsequently calculated according to the following equation:

$$\begin{bmatrix} I_{ref,\alpha} \\ I_{ref,\beta} \end{bmatrix} = F \begin{bmatrix} 1-k & jk \\ -jk & 1-k \end{bmatrix} \begin{bmatrix} U_\alpha \\ U_\beta \end{bmatrix},$$

where:

$$F = \frac{U_{dc,avg} I_{dc,ref}}{\frac{3}{4}\left(U_{\alpha d}^2 + U_{\alpha q}^2 + U_{\beta d}^2 + U_{\beta q}^2\right)(1-k) - 2k\left(U_{\beta q}U_{\alpha d} - U_{\beta d}U_{\alpha q}\right)}.$$

Preferably, factor **k** takes on a value between 0 and 1, so that a value of **k** = 0.5 is assumed under nominal conditions of power supply and no voltage dip; a value of factor k from a range of $0 < \mathbf{k} \leq 1$ is assumed during a voltage dip.

Preferably, the value of factor **k** equalling zero **k** = 0 results in generation of currents with shapes corresponding to voltages in the power grid **PG,** factor **k** with a value of 0.5 **k** = 0.5 results in elimination of the negative sequence component of the measured voltage $\mathbf{U_{conv}}$ and generation of currents of the positive sequence component, and factor **k** with a value of 1 **k** = 1 results in setting the negative sequence component of the measured voltage $\mathbf{U_{conv}}$ with an opposite sign.

Preferably, in the event when the maximum value of the current $I_{max(k=1)}$ exceeds the converter current limit $\mathbf{I_{lim}}$, factor **k** is selected by approximating the characteristics of changes in the effective value of the converter current as a function of factor **k,** from a range of 0.5 to 1.

Preferably, for a normative voltage dip - a so-called 0% dip with a phase shift, the ripple in the direct current link **DC_link** is eliminated when the generation of sinusoidal currents $\mathbf{I_{conv}}$ is insufficient, their distortion is introduced, further minimising the ripples by means of parameter $\mathbf{P_{ratio}}$;

**which** is determined from the ratio of the power setpoint from an **RE** regulator to an instantaneous value resulting from the reference current $\mathbf{I_{ref,\alpha\beta}}$ and the power grid voltage $\mathbf{U_{conv,\alpha\beta}}$ returned from a filter **F2,** according to the following equation:

$$P_{ratio} = \frac{I_{dc,ref} \cdot U_{dc,avg}}{\frac{3}{2}\left(I_{ref,\alpha}U_{\alpha d} + I_{ref,\beta}U_{\beta d}\right)}$$

**whereas** the offset $\mathbf{I_{\alpha\beta,u}}$ between the determined reference current $\mathbf{I_{ref,\alpha\beta}}$ and the measured current $\mathbf{I_{conv,\alpha\beta}}$ after passing through a current regulator **RI** is passed on to a space vector modulator **SVM** system in the **AC/DC** converter.

An advantage of the applied solution is voltage stabilisation, as the use of the method according to the invention allows for stabilisation of the DC voltage in the direct current link (DC_link), which is crucial for maintaining the required power at the input of the DC/DC converter, even under conditions of voltage dips in the power grid.

Another advantage is the minimisation of ripples, as the implementation of the developed method for determining reference currents allows for minimising voltage ripples in a direct current link, thus improving the stability and efficiency of the charging process.

An undoubted advantage is the elimination of electrolytic capacitors from the direct current link, since the use of electrolytic capacitors, which are highly damage-prone, is eliminated by using the method according to the invention.

An important advantage is the reduced capacitance, since by using the method according to the invention it is possible to use reduced capacitance in the direct current link, which reduces the size of the converter module, and the reduced dimensions of the capacitors in the direct current link improve the cooling conditions of the converter.

Another advantage is the detection of dips and asymmetries in the supply voltage, and the improvement of voltage stabilisation in the DC circuit.

A key advantage is the resistance to voltage dips, including the special case of a 0% dip with a phase-shift, which ensures continuity of the charging process.

## BRIEF DESCRIPTION OF THE DRAWINGS

For a better understanding of the invention, it has been illustrated by examples and the attached drawings, in which:

**Fig. 1 -** presents a simplified schematic view of the main circuit of a converter power module comprising a first conversion stage - **AC/DC,** and a second conversion stage - **DC/DC;**

**Fig. 2** - presents a simplified schematic view of a control system responsible for generating reference currents;

**Fig. 3 -** presents a flowchart of a method for determining reference currents - introducing a limitation of the value of factor m from the maximum current of the converter $I_{lim}$;

**Fig. 4** - presents a flowchart of a method for determining reference currents - determining factor r depending on the negative and positive sequence components of voltage;

**Fig. 5 -** presents a flowchart of a method for determining reference currents from the determined values of factors m and r.

The circuit structure in the presented attached figures is only shown for reference, whereas the final shape, including the components used, depends on the implementation of the method in a specific charging station.

## EMBODIMENTS OF THE INVENTION

The following examples illustrate the invention without limiting it in any way.

<u>Example 1.</u> **Method for controlling the input AC/DC converter**

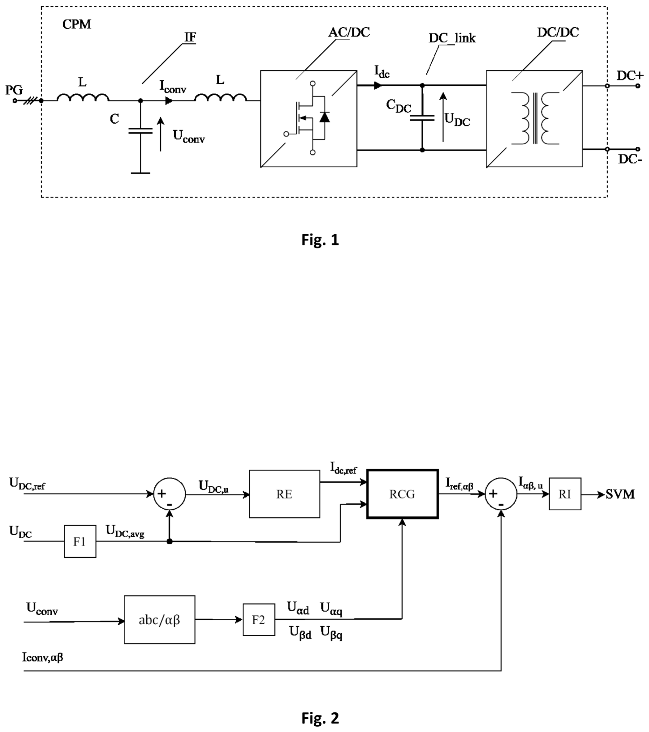

In the drawing, **fig. 1** presents a simplified diagram of the main circuit of a converter power module comprising a first **AC/DC** conversion stage and a second conversion stage - **DC/DC,** which uses the method for controlling the input **AC/DC** converter of the converter power module **CPM** intended for a direct current charging station for electric vehicles according to the invention, involving stabilisation and elimination of voltage ripples $U_{DC}$ in the direct current link **DC_link,** thus maintaining the required power at the output of the **DC/DC** converter, under the conditions of voltage dips in the power grid **PG.**

Fulfilment of this function is possible through implementation of the method developed as part of the invention for determining the reference currents $I_{ref,\alpha\beta}$ constituting a basis for the shaping of the currents $I_{conv}$ of the **AC/DC** converter drawn from the power grid **PG** in the control system, in the reference current generation block **RCG,** as revealed in **fig. 2.** To this end, three-phase supply voltage $U_{conv}$ and phase currents $I_{con}$ of the converter are measured in the **AC/DC** converter system, along with voltage $U_{DC}$ in the direct current link **DC_link.** The three-phase supply voltages $U_{conv}$ undergo decomposition to the $\alpha$-$\beta$ coordinate system, followed by their filtering, e.g. by means of a resonant filter **F2.** The measured output voltage $U_{DC}$ of the **AC/DC** converter is also subjected to filtering, e.g. with a Kalman filter **F1,** and its offset $U_{DC,u}$ is one of the input parameters of a power and voltage regulator **RE.**

In the method for controlling an input **AC/DC** converter according to the invention, reference currents $I_{ref,\alpha\beta}$ are determined by introducing factor **k** affecting the reference currents $I_{ref,\alpha\beta}$, and consequently the shape of input currents $I_{conv}$ in the **AC/DC** converter.

During operation of the converter, depending on the current supply voltage parameters, factor **k** can take on values ranging from 0 to 1 ($0 < k < 1$). From the range of assumed values, factor **k** takes on three characteristic values. Under rated operating conditions, factor **k** takes on a value of 0.5 ($k = 0.5$), which corresponds to the elimination of the negative sequence component $U_n$ of the measured voltage $U_{conv}$ and the generation of symmetrical currents of the positive sequence component. When a voltage dip occurs on the power grid side **PG,** factor **k** aims for a value of 1, contributing to the elimination of voltage ripple $U_{DC}$, and modifying the negative sequence component $U_n$ of the measured voltage $U_{conv}$. For factor **k** equalling 1, the negative sequence component is set with an opposite sign. On the other hand, a **k** value of zero ($k = 0$) means no changes in the negative sequence component of the voltage $U_n$ and no effect on the generation of reference currents, and the currents generated correspond to the supply voltages. The method for determining the value of factor **k** consists of three main steps:

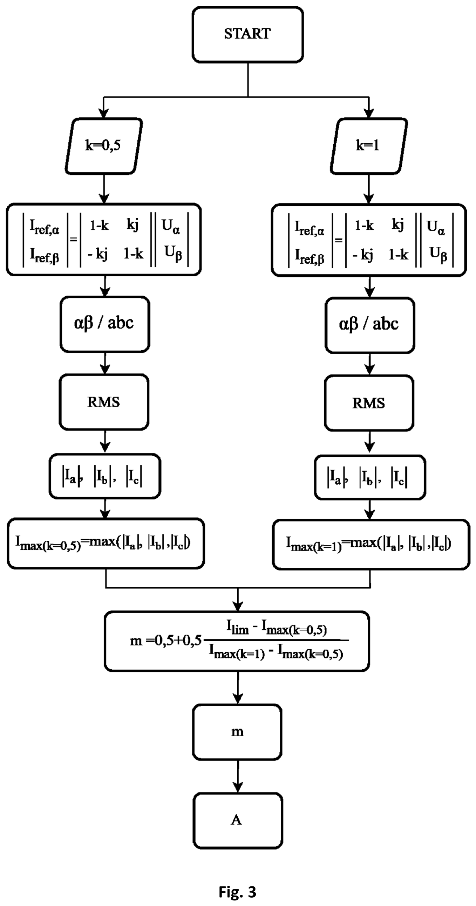

**a)** I.e. step one - factor **m is** selected with regard to the limitations of rated currents in the converter, as revealed in **fig. 3.** To this end, the values of the reference currents $I_{ref,\alpha\beta}$ are determined in the first step for two characteristic values of factor **k:** k = 0.5 and k = 1. Subsequently, the effective values of the three-phase currents $I_a$, $I_b$, $I_c$ are determined after conversion from the $\alpha$-$\beta$ system to the a-b-c system ($\alpha\beta$/abc). From the determined currents, the maximum values $I_{max(k=0.5)}$ and $I_{max(k=1)}$ are selected for factor k = 0.5 and k = 1. In order to limit the maximum current value $I_{max(k=1)}$ from factor k = 1, the characteristics of changes in the effective current value are approximated as a function of factor **k.** Subsequently, by taking into account the determined values of the maximum currents from factor **k** equal to 0.5 $I_{max(k=0.5)}$ and k equal to 1 $I_{max(k=1)}$, factor m resulting from the limit currents of the converter is calculated according to the following equation, its range being limited from a value of 0.5 to a value of 1:

$$m = 0,5 + 0,5 \frac{I_{lim} - I_{\max(k=0,5)}}{I_{\max(k=1)} - I_{\max(k=0,5)}}.$$

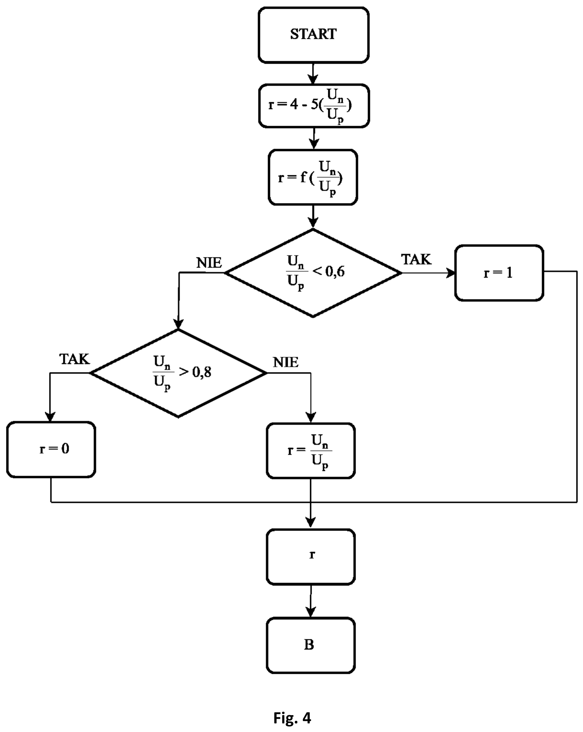

**b)** The second step: factor r is determined with regard to the ratio of the negative sequence component of the measured voltage $U_n$ to the positive sequence component $U_p$, as revealed in **fig. 4.** From the following equation, the ratio of the negative sequence component of voltage $U_n$ to the positive sequence component $U_p$ is determined ($U_n/U_p$) along with the linear dependence of factor **r** on the ratio of the negative and positive sequence components ($U_n/U_p$) using the formula:

$$r = 4 - 5 \cdot \frac{U_n}{U_p}$$

where:

$$\frac{U_n}{U_p} = \sqrt{\frac{0.5\left(U_{\alpha d}^2 + U_{\alpha q}^2 + U_{\beta d}^2 + U_{\beta q}^2\right) + \left(U_{\beta q}U_{\alpha d} - U_{\beta d}U_{\alpha q}\right)}{0.5\left(U_{\alpha d}^2 + U_{\alpha q}^2 + U_{\beta d}^2 + U_{\beta q}^2\right) - \left(U_{\beta q}U_{\alpha d} - U_{\beta d}U_{\alpha q}\right)}}$$

The value of factor r is determined depending on the calculated symmetrical components of the supply voltage. If the value of the ratio of the negative sequence component to the positive sequence component of the voltage ($U_n/U_p$) takes on values below 0.6 ($U_n/U_p < 0.6$), factor r permanently takes on a value of 1 (r = 1). If the value of the ratio of the negative sequence component to the positive sequence component of the voltage ($U_n/U_p$) is higher than 0.8 ($U_n/U_p > 0.8$), factor **r** permanently takes on a value of 0 (r = 0). The result of this step of calculations is the value of factor **r,** which depends on the ratio of the negative to positive sequence symmetrical components of voltage ($U_n/U_p$).

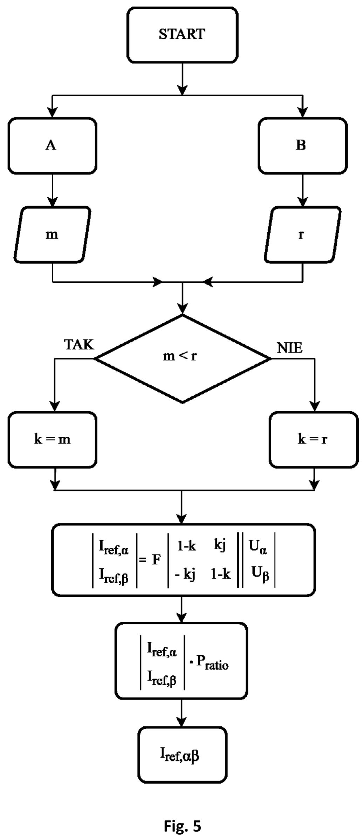

**c)** From the values of factor **m** determined in step a) and the value of factor **r** from step b), the lower value is chosen, as revealed in **fig. 5,** which is then used to calculate and generate the reference currents $I_{ref,\alpha\beta}$, according to the following equation:

$$\begin{bmatrix} I_{ref,\alpha} \\ I_{ref,\beta} \end{bmatrix} = F \begin{bmatrix} 1 - k & jk \\ -jk & 1 - k \end{bmatrix} \begin{bmatrix} U_\alpha \\ U_\beta \end{bmatrix},$$

where:

$$F = \frac{U_{dc,avg}I_{dc,ref}}{\frac{3}{4}\left(U_{\alpha d}^2 + U_{\alpha q}^2 + U_{\beta d}^2 + U_{\beta q}^2\right)(1-k) - 2k\left(U_{\beta q}U_{\alpha d} - U_{\beta d}U_{\alpha q}\right)}.$$

In addition, in the case of a normative voltage dip - a so-called 0% dip with a phase shift - in order to eliminate ripples in the direct current link **DC_link,** when the generation of sinusoidal currents $I_{conv}$ is insufficient, their distortion is introduced, which still additionally minimises ripples in the circuit **DC_link.**

For this purpose, the instantaneous value of the active power is scaled using parameter $P_{ratio}$. This parameter is determined from the ratio of the power setpoint from an **RE** regulator to an instantaneous value resulting from the reference current $I_{ref,\alpha\beta}$ and the power grid voltage $U_{conv,\alpha\beta}$ returned from a filter **F2,** e.g. a resonant filter, according to the following equation.

$$P_{ratio} = \frac{I_{dc,ref} \cdot U_{dc,avg}}{\frac{3}{2}\left(I_{ref,\alpha}U_{\alpha d} + I_{ref,\beta}U_{\beta d}\right)}$$

The offset $I_{\alpha\beta,u}$ between the determined reference current $I_{ref,\alpha\beta}$ and the measured current $I_{conv,\alpha\beta}$ after passing through a current regulator **RI** is passed on to a space vector modulator **SVM** system in the **AC/DC** converter.

**LIST OF REFERENCES:**

**A** - end of algorithm for determining factor **m** depending on the limit current value $I_{lim}$;

**B** - end of algorithm for determining factor **r** resulting from the ratio of the negative sequence component $U_n$ to the positive sequence component $U_p$ of voltage;

**AC** - alternating current

**AC/DC** - alternating current/direct current converter;

**C** - capacitance;

$C_{DC}$ - capacitance in the direct current link constituting an energy buffer;

**CPM** - converter power block;

**DC** - direct current

**DC/DC** - direct current/direct current converter;

**DC+** - direct current positive pole;

**DC-** - direct current negative pole;

**DC_link** - direct current link;

**F1,** F2 - filters;

$I_a$, $I_b$, $I_c$ - phase currents;

$I_{conv}$ - converter current;

$I_{dc}$ - direct current in DC link;

$I_{dc,ref}$ - direct current link reference current;

$I_{lim}$ - limit value of converter current;

$I_{ref,\alpha\beta}$ - reference current in $\alpha$-$\beta$ coordinates;

$I_{\alpha\beta,u}$ - reference current offset;

**IF** - input filter;

**k** - scaling factor for the negative sequence component of voltage during the determination **of** reference currents;

**L** - inductance;

**m** - factor resulting from the converter limit current;

**PG** - power grid;

$P_{ratio}$ - scaling parameter for instantaneous active power;

**r** - factor resulting from the ratio of the negative and positive sequence components of voltage;

**RCG** - reference current generator;

**RE** - voltage and power regulator;

**RI** - current regulator;

**SVM** - space vector modulator;

$U_{conv}$ - converter input voltage;

$U_{conv,\alpha\beta}$ - converter input voltage in $\alpha$-$\beta$ coordinates;

$U_{DC}$ - constant voltage in direct current link;

$U_{DC,avg}$ - filtered voltage measured in direct current link;

$U_{DC,u}$ - voltage offset in direct current link;

$U_{dc,ref}$ - direct current link reference voltage;

$U_p$ - positive sequence component of voltage;

$U_n$ - negative sequence component of voltage.

**Claims**

1. A method for controlling an **AC/DC** converter for electric vehicle charging stations, stabilising voltage in a **DC** circuit under voltage dip conditions during reduced capacitance in a **DC** link constituting the first conversion stage of a converter power module **CPM,** with reduced capacitance $C_{DC}$ in the direct current link **DC_link,** for applications in electric vehicle charging stations **DC_EVCS,** involving the determination of reference currents $I_{ref,\alpha\beta}$ using the method of symmetrical components, **characterised in that** the reference currents $I_{ref,\alpha\beta}$ are determined in the control system, and the negative sequence component of the measured power grid voltage $U_{conv}$ is modified by introducing factors **k, m** and **r** allowing for arbitrary shaping of the converter current $I_{conv}$, the determination of the reference currents $I_{ref,\alpha\beta}$ comprising the following steps:

   **d)** factor **m** is selected with regard to the limitations of the rated currents of the converter, and the values of the reference currents $I_{ref,\alpha\beta}$ are determined for two characteristic values of factor **k:** k = 0.5 and k = 1,

      **wherein** the effective values of the three-phase currents $I_a$, $I_b$, $I_c$ are determined after conversion from the $\alpha$-$\beta$ system to the a-b-c system ($\alpha\beta$/abc),

**whereas** for the determined currents, with factor k = 0.5 and k = 1, the maximum values $I_{max(k=0.5)}$ and $I_{max(k=1)}$ are selected and, in order to limit the maximum value of current $I_{max(k=1)}$ from factor k = 1, the characteristics of changes in the effective value of current are approximated as a function of factor **k,**
**and subsequently,** the determined values of the maximum currents from factor **k** equal to 0.5 $I_{max(k=0.5)}$ and **k** equal to 1 $I_{max(k=1)}$ are taken into account, and factor **m** resulting from the limit currents of the converter is calculated according to the following equation, its range being limited from a value of 0.5 to a value of 1:

$$m = 0{,}5 + 0{,}5 \frac{I_{lim} - I_{\max(k=0,5)}}{I_{\max(k=1)} - I_{\max(k=0,5)}};$$

**e)** factor **r** is determined as the ratio of the negative sequence component of the measured voltage $U_n$ to the positive sequence component $U_p$, and the value of the ratio of the negative sequence component of the voltage $U_n$ to the positive sequence component $U_p$ ($U_n/U_p$) and the linear dependence of factor r on the ratio of the negative and positive sequence components ($U_n/U_p$) are determined using the following formula:

$$r = 4 - 5 \cdot \frac{U_n}{U_p}$$

where:

$$\frac{U_n}{U_p} = \sqrt{\frac{0.5\left(U_{\alpha d}^2 + U_{\alpha q}^2 + U_{\beta d}^2 + U_{\beta q}^2\right) + \left(U_{\beta q} U_{\alpha d} - U_{\beta d} U_{\alpha q}\right)}{0.5\left(U_{\alpha d}^2 + U_{\alpha q}^2 + U_{\beta d}^2 + U_{\beta q}^2\right) - \left(U_{\beta q} U_{\alpha d} - U_{\beta d} U_{\alpha q}\right)}}$$

**wherein** the value of factor r is determined depending on the calculated symmetrical components of the supply voltage, and if the value of the ratio of the negative sequence component to the positive sequence component of the voltage ($U_n/U_p$) takes on values below 0.6 ($U_n/U_p < 0.6$), factor r permanently takes on a value of 1 (r = 1),
**whereas, if** the value of the ratio of the negative sequence component to the positive sequence component of the voltage ($U_n/U_p$) is higher than 0.8 ($U_n/U_p > 0.8$), factor **r** permanently takes on a value of 0 (r = 0), and the value of factor r depends on the ratio of the negative to positive sequence symmetrical components of the voltage ($U_n/U_p$);

**f)** for factor **m** determined in step a) and the value of factor r from step b), the lower value is chosen, the reference currents $I_{ref,\alpha\beta}$ are subsequently calculated according to the following equation:

$$\begin{bmatrix} I_{ref,\alpha} \\ I_{ref,\beta} \end{bmatrix} = F \begin{bmatrix} 1-k & jk \\ -jk & 1-k \end{bmatrix} \begin{bmatrix} U_\alpha \\ U_\beta \end{bmatrix},$$

where:

$$F = \frac{U_{dc,avg} I_{dc,ref}}{\frac{3}{4}\left(U_{\alpha d}^2 + U_{\alpha q}^2 + U_{\beta d}^2 + U_{\beta q}^2\right)(1-k) - 2k\left(U_{\beta q} U_{\alpha d} - U_{\beta d} U_{\alpha q}\right)}.$$

2. The method for controlling a three-wire **AC/DC** converter according to claim 1, **characterised in that** factor **k** takes on a value between 0 and 1, so that
a value of **k** = 0.5 is assumed under nominal conditions of power supply and no voltage dip; a value of factor k from a range of 0 < **k** ≤ 1 is assumed during a voltage dip.

3. The method for controlling a three-wire **AC/DC** converter according to claims 1 - 2, **characterised in that** the value of factor **k** equalling zero **k** = 0 results in generation of currents with shapes corresponding to voltages in the power grid **PG**, factor **k** with a value of 0.5 **k** = 0.5 results in elimination of the negative sequence component of the measured voltage $U_{conv}$ and generation of currents of the positive sequence component, and factor **k** with a value of 1 **k** = 1 results in setting the negative sequence component of the measured voltage $U_{conv}$ with an opposite sign.

4. The method for controlling a three-wire **AC/DC** converter according to claims 1 - 3, **characterised in that** in the event when the maximum value of the current $I_{max(k=1)}$ exceeds the converter current limit $I_{lim}$, factor **k** is selected by approximating the characteristics of changes in the effective value of the converter current as a function of factor **k,** from a range of 0.5 to 1.

5. The method for controlling a three-wire **AC/DC** converter according to claims 1 - 4, **characterised in that,** for a normative voltage dip - that is, a 0% dip with a phase shift, the ripple in the direct current link **DC_link** is eliminated when the generation of sinusoidal currents $I_{conv}$ is insufficient, their distortion is introduced, further minimising the ripples by means of parameter $P_{ratio}$;

   **which** is determined from the ratio of the power setpoint from an **RE** regulator to an instantaneous value resulting from the reference current $I_{ref,\alpha\beta}$ and the power grid voltage $U_{conv,\alpha\beta}$ returned from a filter **F2**, according to the following equation:

$$P_{ratio} = \frac{I_{dc,ref} \cdot U_{dc,avg}}{\frac{3}{2}(I_{ref,\alpha}U_{\alpha d} + I_{ref,\beta}U_{\beta d})}$$

   **whereas** the offset $I_{\alpha\beta,u}$ between the determined reference current $I_{ref,\alpha\beta}$ and the measured current $I_{conv,\alpha\beta}$ after passing through a current regulator **RI** is passed on to a space vector modulator **SVM** system in the **AC/DC** converter.

**Fig. 1**

**Fig. 2**

**Fig. 3**

**Fig. 4**

START

A        B

m        r

TAK  $m < r$  NIE

$k = m$        $k = r$

$$\begin{vmatrix} I_{ref,\alpha} \\ I_{ref,\beta} \end{vmatrix} = F \begin{vmatrix} 1-k & kj \\ -kj & 1-k \end{vmatrix} \begin{vmatrix} U_{\alpha} \\ U_{\beta} \end{vmatrix}$$

$$\begin{vmatrix} I_{ref,\alpha} \\ I_{ref,\beta} \end{vmatrix} \cdot P_{ratio}$$

$$I_{ref,\alpha\beta}$$

**Fig. 5**

Europäisches
Patentamt

European
Patent Office

Office européen
des brevets

# EUROPEAN SEARCH REPORT

**Application Number**

EP 25 21 2510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MING ZHANG ET AL: "A Novel Strategy for Three-Phase/Switch/Level (Vienna) Rectifier Under Severe Unbalanced Grids", IEEE TRANSACTIONS ON INDUSTRIAL ELECTRONICS, IEEE SERVICE CENTER, PISCATAWAY, NJ, USA, vol. 60, no. 10, 1 October 2013 (2013-10-01), pages 4243-4252, XP011510491, ISSN: 0278-0046, DOI: 10.1109/TIE.2012.2217721 * abstract * * sections I-VI; figures 1-17 * | 1-5 | INV. H02M1/00 H02M1/14 H02M7/217 ADD. H02M3/335 |
| A | ZHANG ZHIJIAN ET AL: "Negative Sequence Current Regulation Based Power Control Strategy for Vienna Rectifier Under Unbalanced Grid Voltage Dips", IEEE TRANSACTIONS ON INDUSTRIAL ELECTRONICS, IEEE SERVICE CENTER, PISCATAWAY, NJ, USA, vol. 71, no. 2, 13 March 2023 (2023-03-13) , pages 1170-1180, XP011947247, ISSN: 0278-0046, DOI: 10.1109/TIE.2023.3253959 [retrieved on 2023-03-13] * abstract * * sections I-V; figures 1-17 * | 1-5 | TECHNICAL FIELDS SEARCHED (IPC) H02M |

The present search report has been drawn up for all claims

| Place of search | Date of completion of the search | Examiner |
|---|---|---|
| The Hague | 9 March 2026 | Adami, Salah-Eddine |

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3520211 B1
- WO 2017153366 A1
- EP 3807984 B1
- FR 3073992 B1